# EUROPEAN PATENT SPECIFICATION

(11) **EP 3 115 291 B1**
(45) Date of publication and mention of the grant of the patent: **09.12.2020**
(21) Application number: 16178116.6
(22) Date of filing: 06.07.2016
(51) Int. Cl.: B62M 7/04, B62J 35/00, B62J 1/12, B62K 11/04

(54) **STRADDLED VEHICLE**
GRÄTSCHSITZFAHRZEUG
VÉHICULE MONTÉ À CALIFOURCHON

(30) Priority: 10.07.2015 JP 2015138976
(43) Date of publication of application: 11.01.2017
(73) Proprietor: Yamaha Hatsudoki Kabushiki Kaisha, Iwata-shi, Shizuoka 438-8501 (JP)
(72) Inventor: RUEANGRIT, Kengkla, 10540 Samutprakarn (TH); SURAWICHAI, Pisithsak, 10540 Samutprakarn (TH)
(74) Representative: Grünecker Patent- und Rechtsanwälte PartG mbB

(56) References cited:
- JP-A- S6 288 683
- JP-A- 2005 125 842
- JP-A- 2012 131 422
- US-A- 4 360 214
- US-A1- 2004 124 029
- US-A1- 2004 178 619
- US-A1- 2007 075 517
- US-A1- 2014 174 581

## Description

The present invention relates to a straddled vehicle.

A motorcycle according to the preamble of independent claim 1 is disclosed in JP 2012-131422 A. JP 2010-58748 A discloses a motorcycle which is an example of a straddled vehicle. The motorcycle includes an engine and a fuel tank supported by a vehicle body frame so as to be positioned above the engine. The motorcycle further includes a main seat and a tandem seat disposed further to the rear and higher than the main seat. The tandem seat is formed separately from the main seat. An air cleaner is disposed above the engine.

JP 3159300 U discloses another straddled vehicle. The straddled vehicle includes an engine, that includes a crankcase and a cylinder block, and a fuel tank disposed above the engine. A member considered to be an air cleaner is illustrated in FIG. 1 of JP 3159300 U. This member is disposed behind the cylinder block.

With JP 2010-58748 A, the fuel tank is disposed at as low a position as possible to lower a center of gravity of the vehicle as a whole. Further, the fuel tank is disposed closer to the engine to gather heavy objects at the center of gravity of the vehicle, that is, to achieve centralization of mass.

With JP 2010-58748 A, the tandem seat is formed separately from the main seat and a degree of freedom of disposition of the tandem seat is thus high. Therefore, for example, the tandem seat can be separated from the main seat in a vehicle front-rear direction. In this case, a riding space for a passenger can be increased to improve comfort of the passenger.

That is, generally with the conventional art, the riding space for the passenger is increased in the vehicle front-rear direction to improve the comfort of the passenger.

On the other hand, with JP 3159300 U, the air cleaner is disposed behind the engine and therefore in comparison to a vehicle with which the air cleaner is disposed above the engine, the fuel tank can be disposed closer to the engine more readily. With JP 3159300 U, further centralization of mass is achieved by making use of the ability to dispose the fuel tank closer to the engine in a vehicle up-down direction. Specifically, with JP 3159300 U, the fuel tank is formed to be long in the vehicle front-rear direction and short in the vehicle up-down direction and the fuel tank as a whole is disposed closer to the engine to achieve further centralization of mass.

The inventors performed examination for achieving centralization of mass. The inventors thereby arrived at centralizing mass by making use of the body weight of a rider and a passenger. That is, the inventors examined the moving of the positions of the main seat and the tandem seat forward to dispose the riding positions of the rider and the passenger as close to the engine as possible to centralize the mass. In this examination, the inventors faced the following two issues.

The fuel tank is disposed in front of the main seat and therefore to move the main seat and the tandem seat forward, the shape of the fuel tank must be changed. If the fuel tank is simply shortened in the vehicle front-rear direction, the fuel tank will decrease in capacity. If in addition, the tandem seat is moved forward, the tandem seat will be disposed closer to the main seat so that the riding space for the passenger will become narrow in the vehicle front-rear direction and the comfort of the passenger will degrade.

If the main seat and the tandem seat are to be moved forward without decreasing the capacity of the fuel tank, the fuel tank must be made to project upward and made long in the vehicle front-rear direction. In this case, a center of gravity of the fuel tank is moved upward and moved away from the engine. This runs contrary to the conventional technical idea of disposing the fuel tank closer to the engine to centralize the mass.

Here, the inventors changed the way of thinking. The inventors considered that rather than moving the center of gravity of the fuel tank downward and disposing it closer to the engine, it is more efficient for mass centralization to make use of the body weight of the rider and the passenger.

That is, the body weight of the rider is ordinarily greater than the weight of the fuel tank (including the weight of fuel). Therefore, the body weight of the rider and the passenger is ordinarily greater than the weight of the fuel tank. Further, whereas the fuel tank changes in weight due to consumption of fuel, the body weight of the rider and the passenger does not change during riding. The inventors thus considered that even if the center of gravity of the fuel tank is moved upward, the mass can be centralized more efficiently by disposing the riding positions of the rider and the passenger closer to the engine in the vehicle front-rear direction.

In addition, the inventors also changed the way of thinking in regard to the comfort of the passenger seated on the tandem seat.

Conventionally, to improve the comfort of the passenger, the riding space for the passenger is increased in the vehicle front-rear direction. In contrary to this conventional concept, the inventors have conceived an idea of improving close contact of the passenger with the rider to suppress degradation of the comfort of the passenger.

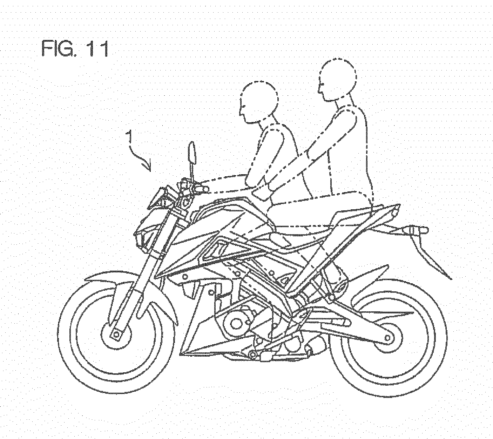

Specifically, the passenger may ride in a posture of putting his/her hands around the waist of the rider (see FIG. 11). When the upper body of the rider is raised (when the upper body approaches an upright posture), it is easier for the passenger to put his/her hands around the waist of the rider. Based on this concept, the inventors considered that if the fuel tank projects upward, the rider can be encouraged to raise his/her upper body. In this case, the close contact of the passenger with the rider can be improved and the degradation of comfort of the passenger can be suppressed. Further, by making the fuel tank project upward, the capacity of the fuel tank can be secured even if the fuel tank is shortened in the vehicle front-rear direction.

Thus an object of the present invention is to provide a saddled vehicle with which effective centralization of mass and suppression of degradation of comfort of an occupant (at least one of a rider and a passenger) can be achieved while securing the capacity of a fuel tank. This object is achieved by a straddled vehicle according to claim 1. Preferred embodiments are laid down in the dependent claims.

A preferred embodiment provides a straddled vehicle including a head pipe, a main frame, extending rearward from the head pipe, a rear arm, supported by the main frame in a manner enabling rotation around a pivot axis extending in a vehicle width direction, a rear wheel, supported by the rear arm, an engine, which includes a crankcase and a cylinder extending upward from the crankcase and at least a portion of which is disposed at a position below the main frame and in front of the pivot axis, an air cleaner, disposed behind the cylinder, a fuel tank, disposed at a position behind the head pipe and above the engine, a main seat, which is disposed behind the fuel tank and on which a rider sits, and a tandem seat, at least a portion of which is disposed at a position further to the rear and higher than the main seat and which is formed separately from the main seat and on which a passenger sits.

The fuel tank includes an upper edge portion, at which a fuel filler hole is disposed, a lower edge portion, disposed below the upper edge portion, a rear edge portion, disposed between the upper edge portion and the lower edge portion in a vehicle up-down direction and extending in the vehicle up-down direction, and a first inclined portion, extending forward and upward and coupling the rear edge portion and the upper edge portion with each other. A dimension in the vehicle up-down direction from the upper edge portion of the fuel tank to the lower edge portion of the fuel tank is greater than a dimension of the upper edge portion of the fuel tank in a vehicle front-rear direction. In a plan view of the straddled vehicle, at least a portion of a front edge of the main seat is disposed behind the rear edge portion of the fuel tank. In a side view of the straddled vehicle, a rear end of the fuel tank and a front end of the main seat are disposed further to the front than the pivot axis. In the side view of the straddled vehicle, a center of the tandem seat in the vehicle front-rear direction is disposed further to the front than a rotation center of the rear wheel. The center of the tandem seat in the vehicle front-rear direction signifies a portion at which a distance in the vehicle front-rear direction from a front end of the tandem seat and a distance in the vehicle front-rear direction from a rear end of the tandem seat are equal to each other.

With this arrangement, the front end of the main seat is disposed further to the front than the pivot axis that corresponds to a rotation center of the rear arm. The center of the tandem seat in the vehicle front-rear direction is disposed further to the front than the rotation center of the rear wheel in the side view of the straddled vehicle. The main seat and the tandem seat are thereby moved forward and the riding positions of the rider and the passenger can thus be moved forward. The mass can thus be centralized effectively.

In addition, the dimension in the vehicle up-down direction from the upper edge portion of the fuel tank to the lower edge portion of the fuel tank is greater than the dimension of the upper edge portion of the fuel tank in the vehicle front-rear direction. That is, the fuel tank is long in the vehicle up-down direction. The capacity of the fuel tank can thus be maintained even if the fuel tank is shortened in the vehicle front-rear direction. Further, the fuel tank is moved forward so that the rear end of the fuel tank is positioned further to the front than the pivot axis and therefore the main seat and the tandem seat are moved forward. The mass can thus be centralized while maintaining the capacity of the fuel tank.

Further, the dimension in the vehicle up-down direction from the upper edge portion of the fuel tank to the lower edge portion of the fuel tank is greater than the dimension of the upper edge portion of the fuel tank in the vehicle front-rear direction and the fuel tank positioned in front of the rider is thus long in the vehicle up-down direction so that the rider is encouraged to raise his/her upper body. Consequently, the rider rides in a posture that makes it easy for the passenger to put his/her hand around the waist of the rider. Therefore, even if a riding space for the passenger is shortened in the vehicle front-rear direction, close contact of the passenger with the rider can be improved and degradation of comfort of the passenger can be suppressed.

In the preferred embodiment, an upper end of the fuel tank may be disposed higher than the rear end of the tandem seat.

With this arrangement, the fuel tank projects upward and the upper end of the fuel tank is disposed higher than the rear end of the tandem seat. The fuel tank is thereby made long in the vehicle up-down direction. The capacity of the fuel tank can thus be secured even if the fuel tank is shortened in the vehicle front-rear direction. In addition, the upper end of the fuel tank is disposed at a high position so that the rider is encouraged by the fuel tank to raise his/her upper body. When the upper body of the rider is raised, the passenger can hold the waist of the rider easily and can easily come into contact with the rider. Close contact of the passenger with the rider can thereby be improved and degradation of comfort of the passenger can be suppressed.

In the preferred embodiment, the lower edge portion of the fuel tank may, in the side view of the straddled vehicle, be disposed above the main frame and be separated from the main frame in the vehicle up-down direction.

With this arrangement, the fuel tank is disposed at a high position so that the lower edge portion of the fuel tank is positioned above the main frame in the side view of the straddled vehicle. The rider is thus encouraged by the fuel tank to raise his/her upper body. Consequently, the rider rides in a posture that makes it easy for the passenger to put his/her hand around the waist of the rider. Close contact of the passenger with the rider can thereby be improved and degradation of comfort of the passenger can be suppressed.

In the preferred embodiment, a dimension in the vehicle front-rear direction from a front end of the fuel tank to the rear end of the fuel tank may be smaller than a dimension in the vehicle width direction from a left end of the fuel tank to a right end of the fuel tank.

With this arrangement, the dimension of the fuel tank in the vehicle front-rear direction is smaller than the dimension of the fuel tank in the vehicle width direction. Because the fuel tank is shortened in the vehicle front-rear direction in this way, the main seat and the tandem seat can be moved forward and the riding positions of the rider and the passenger can be moved forward. The mass can thus be centralized effectively.

In the preferred embodiment, the straddled vehicle may further include a steering handle that includes two handle grips gripped by the rider and is pivoted in the vehicle width direction in accordance with an operation of the rider steering the straddled vehicle. The handle grips may be disposed higher than the upper end of the fuel tank in the side view of the straddled vehicle when the steering handle is disposed at a straight traveling position at which the straddled vehicle travels straight.

With this arrangement, the handle grips of the steering handle are disposed at high positions. The rider gripping the handle grips is thus encouraged by the steering handle to raise his/her upper body. When the upper body of the rider is raised, the passenger can hold the waist of the rider easily. Close contact of the passenger with the rider can thereby be improved and degradation of comfort of the passenger can be suppressed.

In the preferred embodiment, the straddled vehicle may further include a steering handle that pivots in the vehicle width direction in accordance with an operation of the rider steering the straddled vehicle, and a main switch disposed between the steering handle and the fuel tank in the plan view of the straddled vehicle and being operated by the rider when the engine is to be started.

With this arrangement, the main switch that is operated by the rider when the engine is to be started is disposed, in the plan view of the straddled vehicle, between the steering handle and the fuel tank. Therefore, in comparison to a case where the main switch is disposed in front of the steering handle, the front end of the fuel tank is moved rearward. A center of gravity of the fuel tank is thus moved rearward and disposed closer to a center of gravity of the engine in the vehicle front-rear direction. The mass can thereby be centralized further.

In the preferred embodiment, the dimension in the vehicle front-rear direction from the front end of the fuel tank to the rear end of the fuel tank may be smaller than a dimension in the vehicle front-rear direction from the front end of the main seat to a rear end of the main seat. With this arrangement, the dimension of the fuel tank in the vehicle front-rear direction is small and therefore the main seat and the tandem seat can be moved forward and the riding positions of the rider and the passenger can be moved forward. The mass can thus be centralized effectively.

In the preferred embodiment, the rear end of the tandem seat may be disposed further to the front than the rotation center of the rear wheel in the side view of the straddled vehicle. With this arrangement, the tandem seat is moved forward so that the rear end of the tandem seat is disposed further to the front than the rotation center of the rear wheel in the side view of the straddled vehicle and therefore the riding position of the passenger can be moved forward. The mass can thereby be centralized effectively.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a schematic left side view of a straddled vehicle according to a preferred embodiment.
FIG. 2 is a schematic left side view of the straddled vehicle from which exterior covers, etc., have been removed.
FIG. 3 is a schematic plan view of the straddled vehicle from which the exterior covers, etc., have been removed.
FIG. 4 is a schematic view for describing the exterior covers.
FIG. 5 is a schematic left side view of a fuel tank mounted to a vehicle body frame.
FIG. 6 is a schematic plan view of the fuel tank mounted to the vehicle body frame.
FIG. 7 is a sectional view of a section taken along line VII-VII in FIG. 5.
FIG. 8 is a sectional view of a section taken along line VIII-VIII in FIG. 5.
FIG. 9 is a schematic left side view of the fuel tank.
FIG. 10 is a schematic plan view of the fuel tank.
FIG. 11 is a schematic view of a state where a rider and a passenger are riding on the straddled vehicle.

### DETAILED DESCRIPTION OF THE PREFERRED EMBODIMENTS

Front-rear, up-down, and left-right directions in the following description are defined on the basis of a viewpoint of a forward-facing rider who sits on a straddled vehicle 1 in a reference posture in which the straddled vehicle 1 travels straight ahead on a horizontal plane (in which a steering handle 7 is disposed at a straight-traveling position). The left-right direction corresponds to a vehicle width direction. A vehicle center WO corresponds to a vertical plane that passes through a center line of a head pipe 3 and that is perpendicular to a rotational center Cr of a rear wheel Wr. The straddled vehicle 1 in the reference posture will be hereinafter described unless specific notice is given.

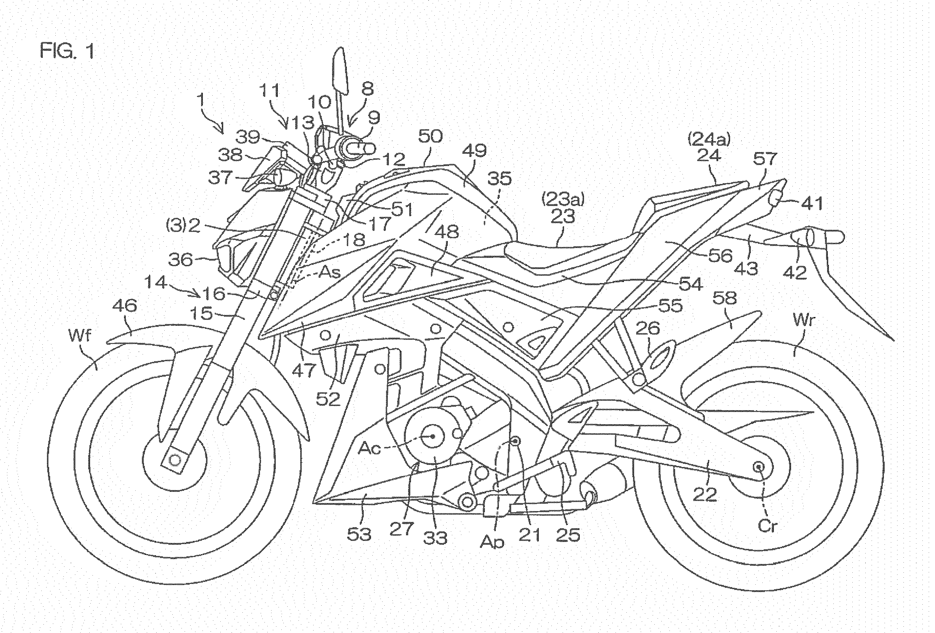

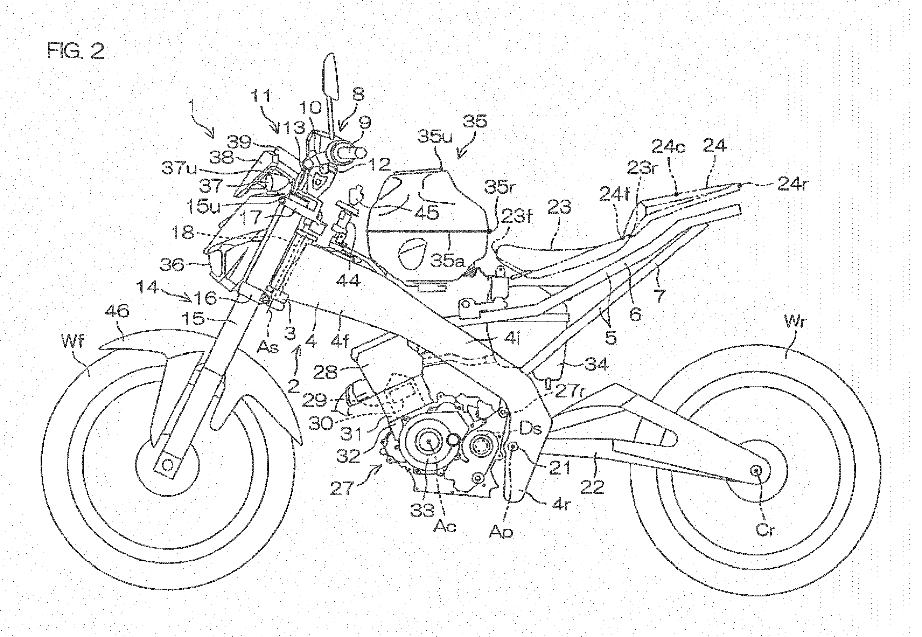

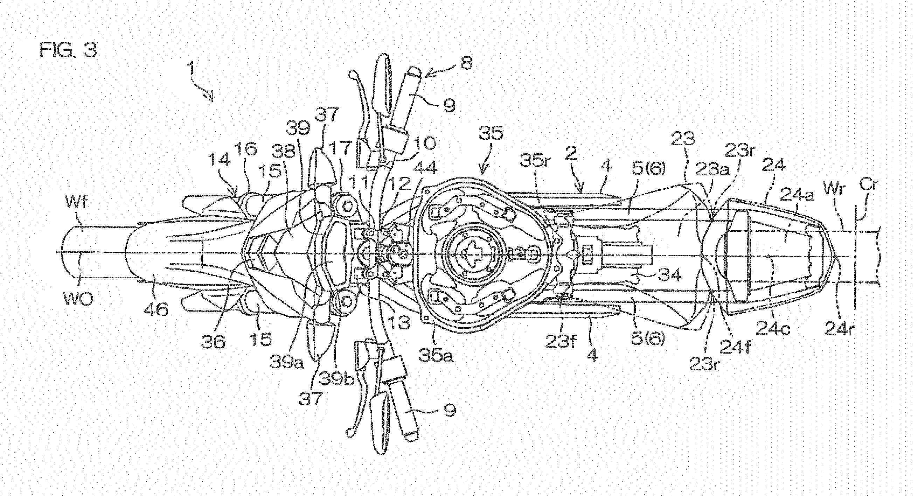

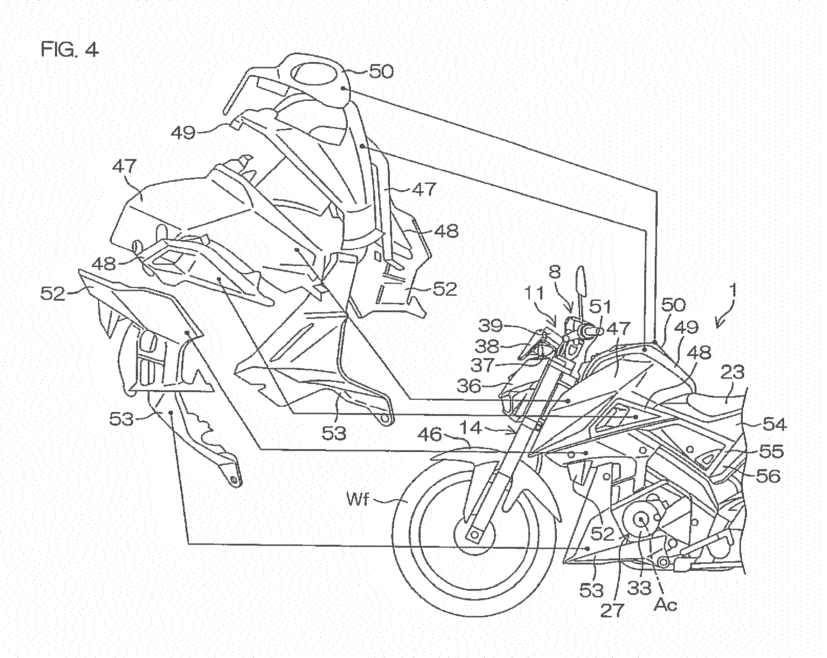

FIG. 1 is a schematic left side view of the straddled vehicle 1 according to a preferred embodiment of the present invention. FIG. 2 is a schematic left side view of the straddled vehicle 1 from which exterior covers, etc., have been removed. FIG. 3 is a schematic plan view of the straddled vehicle 1 from which the exterior covers, etc., have been removed. FIG. 4 is a schematic view for describing the exterior covers. A left upper portion of FIG. 4 shows an exploded perspective view of a tank cover and an engine cover.

The straddled vehicle 1 includes a vehicle body frame 2. FIG. 2 shows the straddled vehicle 1 from which the exterior covers have been removed. The vehicle body frame 2 includes a head pipe 3 extending rearward and upward, a pair of right and left main frames 4 extending rearward and downward from the head pipe 3, and a pair of right and left seat frames 5 extending rearward from the pair of main frames 4. As shown in FIG. 3, the pair of main frames 4 are disposed respectively at a right side and a left side of the vehicle center WO. The pair of main frames 4 face each other in a right-left direction. The same applies to the pair of seat frames 5.

As shown in FIG. 2, each main frame 4 includes a front end portion 4f extending rearward and downward from the head pipe 3 while spreading outward in the vehicle width direction, an intermediate portion 4i extending downward and rearward from the front end portion 4f, and a rear end portion 4r extending downward from the intermediate portion 4i. The seat frames 5 are connected to the intermediate portions 4i of the main frames 4. Each seat frame 5 includes an upper frame 6 extending rearward from a main frame 4 and a lower frame 7 extending rearward from the main frame 4 and disposed below the upper frame 6 in side view.

The straddled vehicle 1 includes a front 14 rotatably supporting a front wheel Wf and being supported by the head pipe 3 so as to be rotatable around a steering axis As, which corresponds to the center line of the head pipe 3. The straddled vehicle 1 further includes a steering handle 8 that is operated by the rider when steering the straddled vehicle 1 and a handle holder 11 coupling the steering handle 8 to the front fork 14.

As shown in FIG. 2, the front 14 includes a pair of front suspensions 15 respectively disposed at a right side and a left side of the front wheel Wf, an under bracket 16 mounted to the pair of front suspensions 15, and a top bracket 17 mounted, above the under bracket 16, to the pair of front suspensions 15. The front fork 14 further includes a steering shaft 18 supported by the top bracket 17 and the under bracket 16.

An upper end and a lower end of the steering shaft 18 are respectively supported by the top bracket 17 and the under bracket 16. The pair of mutually parallel front suspensions 15 project upward from the top bracket 17. The steering shaft 18 is disposed behind the front suspensions 15 in side view. The steering shaft 18 that extends rearward and upward is inserted inside the head pipe 3. The steering shaft 18 is rotatable with respect to the head pipe 3 around the steering axis As that extends rearward and upward. A steering force applied to the steering handle 8 by the rider is transmitted via the handle holder 11 to the front fork 14. The front fork 14 thereby pivots around the steering axis As together with the front wheel Wf, etc., and the straddled vehicle 1 is steered.

As shown in FIG. 2, the steering handle 8 is disposed above the front fork 14. The steering handle 8 includes a pair of handle grips 9 to be gripped by the rider, and a handle bar 10 supporting the pair of handle grips 9. The pair of handle grips 9 are mounted respectively to a right end portion and a left end portion of the handle bar 10. A central portion of the handle bar 10 is mounted to the handle holder 11. The handle grip 9 at the right side is a throttle grip that is rotatable with respect to the handle bar 10. An output of an engine 27 is adjusted according to a rotation amount of the throttle grip.

As shown in FIG. 2, the handle holder 11 includes upper holders 12 disposed above the steering handle 8 and lower holders 13 disposed between the top bracket 17 and the steering handle 8. The upper holders 12 are detachably fixed by bolts to the lower holders 13. The lower holders 13 are fixed to the top bracket 17. The handle holder 11 clamps the handle bar 10 by the upper holders 12 and the lower holders 13 to hold the steering handle 8. The lower holders 13 are not restricted to being members separate from the top bracket 17 and may be a single member integral to the top bracket 17.

The straddled vehicle 1 includes a rear arm 22 rotatably supporting a rear wheel Wr and being supported by the vehicle body frame 2 so that the rear arm 22 rotates upward and downward around a pivot axis Ap extending in the right-left direction. A front end portion of the rear arm 22 is disposed between the pair of main frames 4. The front end portion of the rear arm 22 is coupled to the main frames 4 via a pivot shaft 21 extending in the right-left direction. Respective end portions of the pivot shaft 21 are supported by the pair of main frames 4. The rear wheel Wr is rotatably supported by a rear end portion of the rear arm 22. The rear arm 22 and the rear wheel Wr are rotatable in the up-down direction with respect to the main frames 4 around a central line of the pivot shaft 21 corresponding to the pivot axis Ap.

As shown in FIG. 2, the straddled vehicle 1 includes a main seat 23 on which the rider sits and a tandem seat 24 on which a passenger sits. The straddled vehicle 1 further includes main steps 25 on which the feet of the rider are placed and tandem steps 26 on which the feet of the passenger are placed.

The main seat 23 and the tandem seat 24 are separate members. The main seat 23 is disposed behind a fuel tank 35 and the tandem seat 24 is disposed behind and above the main seat 23. The main seat 23 and the tandem seat 24 are supported from below thereof by the seat frames 5.

A seat surface 24a of the tandem seat 24 that contacts the buttocks of the passenger is disposed further to the rear and higher than a seat surface 23a of the main seat 23 that contacts the buttocks of the rider. The main steps 25 are disposed below the main seat 23 in side view. The tandem steps 26 are disposed further to the rear than the main steps 25. The main steps 25 and the tandem steps 26 are supported by the vehicle body frame 2.

A rear end 24r of the tandem seat 24 is disposed above the rear wheel Wr in side view. The rear end 24r of the tandem seat 24 is disposed further to the front than a rotation center Cr of the rear wheel Wr in side view. Similarly, a center 24c of the tandem seat 24 in the front-rear direction is disposed further to the front than the rotation center Cr of the rear wheel Wr. A front end 24f of the tandem seat 24 is disposed further to the front than a front end of the rear wheel Wr in side view.

The front end 24f of the tandem seat 24 is disposed above the main seat 23 in side view. To move a riding position of the passenger to the front, the front end 24f of the tandem seat 24 is disposed further to the front than a rear end 23r of the main seat 23. A rear end portion of the main seat 23 and a front end portion of the tandem seat 24 are overlapped with each other in the up-down direction.

The front end 23f of the main seat 23 is disposed further to the front than the pivot axis Ap in side view. The front end 23f of the main seat 23 is disposed further to the front than a front edge of the rear end portion 4r of the main frame 4 in side view. The front end 23f of the main seat 23 is disposed further to the front than a rear end 27r of the engine 27 in side view. The front edge of the rear end portion 4r of the main frame 4 is disposed further to the front than the pivot axis Ap. The rear end 27r of the engine 27 is disposed at a position further to the front than the pivot axis Ap and higher than the pivot axis Ap.

As shown in FIG. 2, the straddled vehicle 1 includes the engine 27 that generates a motive power to cause the straddled vehicle 1 to travel, an air cleaner 34 that removes foreign matters from air to be supplied to the engine 27, and a fuel tank 35 that stores fuel to be supplied to the engine 27. The engine 27 is supported by the vehicle body frame 2. Similarly, the fuel tank 35 and the air cleaner 34 are supported by the vehicle body frame 2.

The engine 27 is disposed below the main frame 4 in side view. The engine 27 is disposed between the front wheel Wf and the rear wheel Wr in the front-rear direction. The engine 27 includes a cylinder body 31 defining a cylinder 30 that houses a piston 29, and a cylinder head 28 defining, together with the piston 29, a combustion chamber in which fuel is combusted. The engine 27 further includes a crankcase 32 housing a crankshaft that is rotatable around a crank axis Ac extending horizontally in the right-left direction, and a crank cover 33 disposed at a side of the crankcase 32.

The cylinder body 31 may be a single member integral to the crankcase 32 or may be a separate member from the crankcase 32. The crankcase 32 houses a driveshaft Ds extending in the vehicle width direction and a sprocket that rotates together with the driveshaft Ds. The driveshaft Ds is coupled to the rear wheel Wr via a chain wound around the sprocket. Rotation of the crankshaft is transmitted via the driveshaft Ds to the rear wheel Wr.

The cylinder 30 extends upward from the crankcase 32. The cylinder 30 and the crank axis Ac are disposed below the intermediate portion 4i of the main frame 4 in side view. A rear end portion 4r of the main frame 4 is positioned behind the crank axis Ac in side view. A lower end of the rear end portion 4r corresponding to a lower end of the main frame 4 is positioned lower than the crank axis Ac. The cylinder 30 and the crank axis Ac are positioned further to the front than the pivot axis Ap.

The fuel tank 35 is disposed above the main frame 4 in side view. All portions of the fuel tank 35 are separated upward from the main frame 4 in side view. The fuel tank 35 is disposed above the engine 27 in side view. The cylinder 30 and the crank axis Ac are disposed below the fuel tank 35 in side view. Front ends of the upper frames 6 of the seat frames 5 are disposed below the fuel tank 35 in side view. Front ends of the lower frames 7 of the seat frames 5 are disposed further to the rear than the fuel tank 35 in side view.

An upper end 35u of the fuel tank 35 is disposed higher than the rear end 24r of the tandem seat 24. The upper end 35u of the fuel tank 35 is disposed higher than upper ends 37u of flashers 37. Upper ends 15u of the front suspensions 15 are disposed lower than the upper ends 37u of the flashers 37. The handle grips 9 are disposed higher than the upper end 35u of the fuel tank 35.

A rear end 35r of the fuel tank 35 is disposed further to the front than the front end 23f of the main seat 23. The rear end 35r of the fuel tank 35 signifies a rear end of the fuel tank 35 not including a joined portion 35a. The rear end 35r of the fuel tank 35 is disposed higher than any portion of the main seat 23. The pivot axis Ap is disposed further to the rear than the front end 23f of the main seat 23.

The air cleaner 34 houses an element that removes foreign matters from air. The air cleaner 34 is disposed behind and below the fuel tank 35 in side view. The air cleaner 34 is disposed behind and above the engine 27 in side view. The air cleaner 34 is connected to the engine 27 via an air intake pipe extending forward from the air cleaner 34. The air cleaned by the air cleaner 34 is supplied via the air intake pipe to the engine 27.

The air cleaner 34 is disposed behind the cylinder 30. A front end of the air cleaner 34 is disposed further to the rear than a rear end of the cylinder 30. An upper end of the air cleaner 34 is disposed higher than an upper end of the cylinder 30. A lower end of the air cleaner 34 is disposed lower than the upper end of the cylinder 30. At least a portion of the air cleaner 34 is disposed at a height equivalent to that of the cylinder 30.

The air cleaner 34 is disposed further to the rear than the crank axis Ac. The air cleaner 34 is disposed above the pivot axis Ap. The air cleaner 34 is disposed below the main seat 23. The rear end 23r of the main seat 23 is disposed further to the rear than the air cleaner 34. The pair of main frames 4 are respectively disposed at a right side and a left side of the air cleaner 34. The same applies to the pair of seat frames 5. In side view, the air cleaner 34 projects upward from the upper frames 6 of the seat frames 5 and projects downward from the lower frames 7 of the seat frames 5.

As shown in FIG. 1, the straddled vehicle 1 includes a headlamp 36 that emits light forward and two flashers 37 that flash in accordance with an operation of the rider. The straddled vehicle 1 further includes a tail lamp 41 that emits light rearward and two flashers 42 that flash in accordance with an operation of the rider.

The headlamp 36 and the flashers 37 are disposed above the front wheel Wf in side view. The flashers 37 are disposed above the headlamp 36 in side view. The headlamp 36 is disposed in front of the head pipe 3. As shown in FIG. 3, the headlamp 36 overlaps with the vehicle center WO in the vehicle width direction. The two flashers 37 are respectively disposed at the right side and the left side of the vehicle center WO. The headlamp 36 and the flashers 37 are supported by the front fork 14. The headlamp 36 and the flashers 37 pivot around the steering axis As together with the front fork 14.

As shown in FIG. 1, the tail lamp 41 and the flashers 42 are disposed above the rear wheel Wr in side view. The flashers 42 are disposed further to the rear than the tail lamp 41. The tail lamp 41 overlaps with the vehicle center WO. The two flashers 42 are respectively disposed at the right side and the left side of the vehicle center WO. The tail lamp 41 is supported by the seat frames 5. The flashers 42 are supported by the seat frames 5 via a rear stay 43. The tail lamp 41 and the flashers 42 are disposed further to the rear than the rear end 24r of the tandem seat 24.

As shown in FIG. 3, the straddled vehicle 1 includes a meter 39 that displays various information including a traveling speed of the straddled vehicle 1, and a meter cover 38 disposed in front of the meter 39. The meter 39 is, for example, a digital meter. The meter 39 includes a display 39a (display device) that displays the various information and a meter housing 39b that houses the display 39a so that a portion of the display 39a is exposed through an opening provided with the meter housing 39b.

As shown in FIG. 2, the meter 39 and the meter cover 38 are disposed in front of the steering handle 8. The meter 39 and the meter cover 38 are disposed above the headlamp 36. The meter 39 is disposed between the two flashers 37. The meter 39 and the meter cover 38 are supported by the front fork 14. The meter 39 and the meter cover 38 pivot around the steering axis As together with the front fork 14.

The straddled vehicle 1 includes a main switch 44 that is operated by the rider when the engine 27 and electrical equipment are to be started. FIG. 2 shows an example where the main switch 44 is a key cylinder. When a main key 45, inserted in the main switch 44, is disposed at a start position, electric power is supplied to a starter motor that starts the engine 27 and the engine 27 is started.

The main switch 44 is disposed further to the rear than the head pipe 3. The main switch 44 is positioned in front of the fuel tank 35. The main switch 44 is disposed lower than the upper end 35u of the fuel tank 35. The main switch 44 is disposed above the main frames 4 in side view. The main switch 44 is supported by the main frames 4. As shown in FIG. 3, the main switch 44 is overlapped with the vehicle center WO. In plan view, the main switch 44 is disposed between the handle bar 10 and the fuel tank 35.

As shown in FIG. 1, the straddled vehicle 1 includes exterior covers that define an outer surface of the straddled vehicle 1. The exterior covers include a front fender 46 disposed above the front wheel Wf, tank covers 47 to 50 disposed above and at sides of the fuel tank 35, and a switch cover 51 covering the main switch 44. The exterior covers further include engine covers 52 and 53 disposed at sides of the engine 27, rear covers 54 to 57 disposed at sides of the seat frames 5, and a rear fender 58 disposed above the rear wheel Wr.

As shown in FIG. 4, the tank covers include a center cover 49 disposed above the fuel tank 35 and a cap cover 50 defining an opening at which a tank cap is exposed. The tank covers further include two side covers 47 disposed at the sides of the fuel tank 35 and two under covers 48 disposed below the two side covers 47.

As shown in FIG. 4, the engine covers include two upper covers 52 disposed at sides of the cylinder 30 and the main frames 4 and a lower cover 53 disposed below the two upper covers 52. The upper covers 52 are disposed below the side covers 47 and the under covers 48 of the tank covers. The lower cover 53 includes a portion positioned in front of the crank cover 33 provided at the engine 27 and a portion positioned below the crank cover 33.

As shown in FIG. 1, the rear covers include an upper cover 54 disposed below the main seat 23 in side view and a lower cover 55 disposed below the upper cover 54. The rear covers further include a side cover 56 disposed behind the upper cover 54 and the lower cover 55 and a tail cover 57 disposed behind the side cover 56. The tandem seat 24 is disposed above the side cover 56 in side view. A rear end of the tail cover 57 is positioned behind the rear end 24r of the tandem seat 24.

The fuel tank 35 shall now be described in detail.

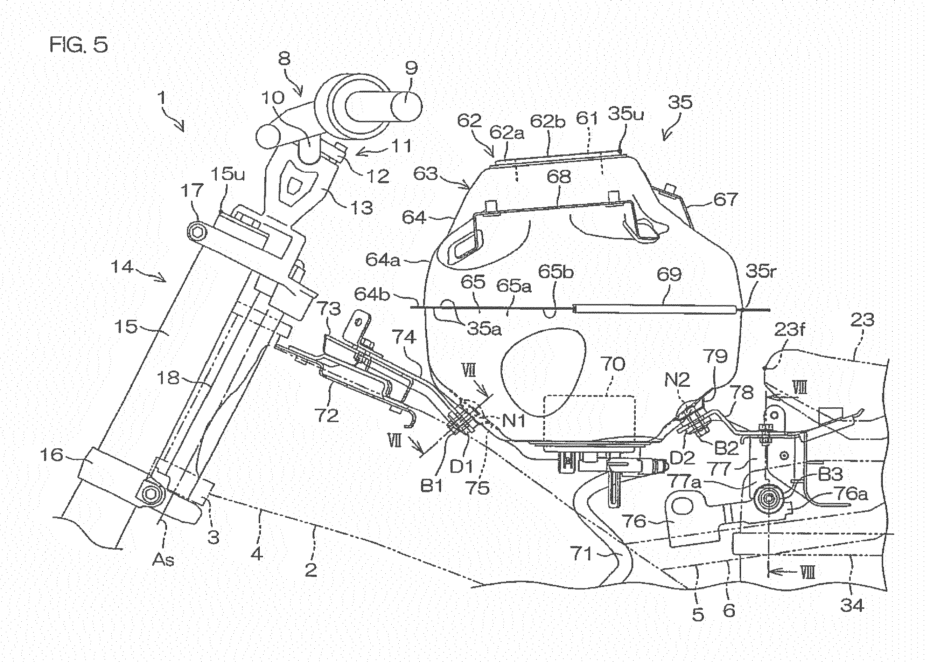

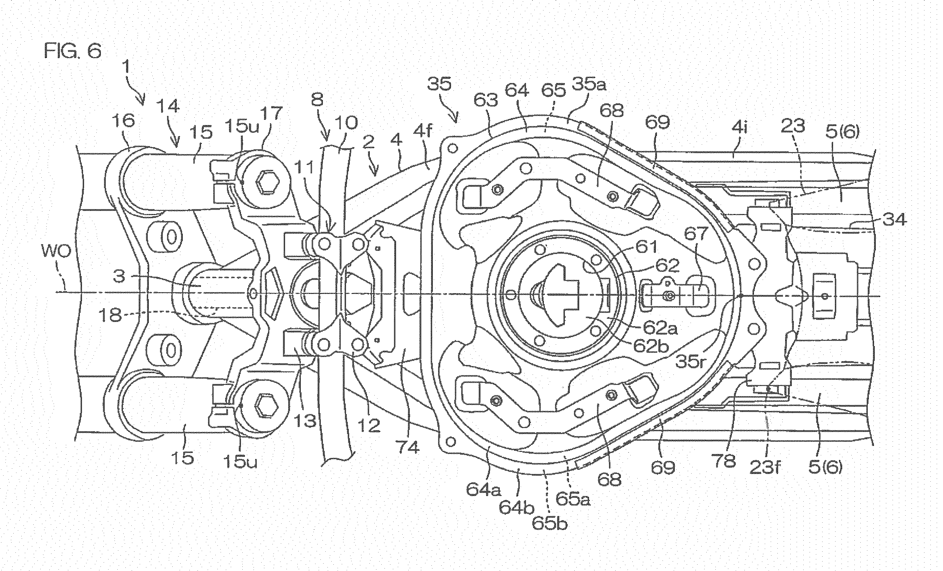

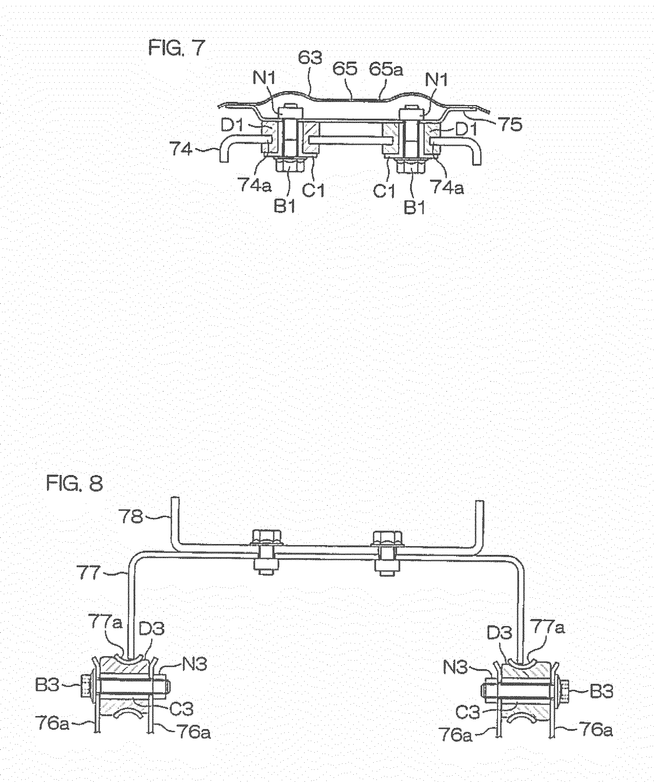

FIG. 5 and FIG. 6 are a schematic left side view and plan view of the fuel tank 35 mounted to the vehicle body frame 2. FIG. 7 is a sectional view of a section taken along line VII-VII in FIG. 5. FIG. 8 is a sectional view of a section taken along line VIII-VIII in FIG. 5.

As shown in FIG. 5, the fuel tank 35 includes a hollow tank main body 63, defining a storage space storing fuel, and a tank cap 62 that opens and closes a fuel filler hole 61 connected to the storage space.

As shown in FIG. 6, the tank cap 62 includes a circular annular cap base 62a, defining the fuel filler hole 61, and a cap main body 62b, disposed inside the cap base 62a. The cap base 62a is fixed to the tank main body 63. The cap main body 62b is movable with respect to the cap base 62a between an open position at which the fuel filler hole 61 is open and a closed position at which the fuel filler hole 61 is closed.

The tank main body 63 may be a single, integral member or may include a plurality of mutually coupled members. Also, the material of the tank main body 63 may be a metal or may be a synthetic resin. FIG. 5 and FIG. 6 show an example where the tank main body 63 includes a plurality of metal members. As shown in FIG. 5, the tank main body 63 includes a cup-shaped upper member 64, provided with an opening at a lower portion, and a cup-shaped lower member 64, provide with an opening at an upper portion. The upper member 64 is disposed above the lower member 65. The upper member 64 and the lower member 65 are connected to each other at a joined portion 35a.

The upper member 64 includes a cup-shaped upper main body portion 64a, provided with an opening at a lower portion, and an annular upper flange portion 64b, extending outward from a lower end of the upper main body portion 64a. The lower member 65 includes a cup-shaped lower main body portion 65a, provided with an opening at an upper portion, and an annular lower flange portion 65b, extending outward from an upper end of the lower main body portion 65a. The storage space of the tank main body 63 is defined by the upper main body portion 64a and the lower main body portion 65a. The joined portion 35a of the tank main body 63 includes the upper flange portion 64b and the lower flange portion 65b. The upper flange portion 64b and the lower flange portion 65b are fixed to each other by welding.

As shown in FIG. 6, the tank cap 62 is mounted to the upper member 64. The center bracket 67, to which the center cover 49 (see FIG. 4) is mounted, and the two side brackets 68, to which the side covers 47 (see FIG. 4) are mounted, are fixed to the upper member 64. The cushioning 69, prepared from an elastic material, such as rubber or resin, etc., is mounted to the joined portion 35a of the tank main body 63. The cushioning 69 is disposed between the exterior covers and the fuel tank 35.

As shown in FIG. 5, a fuel pump 70 that delivers the fuel inside the fuel tank 35 toward the engine 27 is mounted to the lower member 65. The fuel pump 70 is disposed inside the fuel tank 35. A lower end portion of the fuel pump 70 projects downward from the lower member 65. A fuel hose 71 that guides the fuel toward the engine 27 is mounted to the lower end portion of the fuel pump 70.

A coupling structure that couples the fuel tank 35 to the vehicle body frame 2 shall now be described.

As shown in FIG. 5, a front portion of the fuel tank 35 is supported by the main frames 4 via a tank bracket 74. Specifically, the straddled vehicle 1 includes a frame bracket 72, fixed to the main frames 4, an intermediate bracket 73, supported by the frame bracket 72, and the tank bracket 74, supported by the intermediate bracket 73. The straddled vehicle 1 further includes a tank stay 75, fixed to the tank main body 63, nuts N1, fixed to the tank stay 75, cylindrical dampers D1, held by the tank bracket 74, and bolts B1, coupling the dampers D1 to the tank stay 75.

The tank bracket 74 is coupled to the intermediate bracket 73 by a bolt. As shown in FIG. 7, the dampers D1 are disposed inside penetrating holes provided in the tank bracket 74. Edges 74a of the penetrating holes of the tank bracket 74 are disposed inside annular groove provided at outer peripheries of the dampers D1. The bolts B1 are inserted in cylindrical collars C1 disposed inside the dampers D1. Tip portions of the bolts B1 are screwed into the nuts N1 held by the tank stay 75. The tank main body 63 is coupled to the tank bracket 74 via the dampers D1 that are an example of an elastic body prepared from an elastic material, such as rubber or resin.

Also, a rear portion of the fuel tank 35 is supported by the seat frames 5 via a tank bracket 78. Specifically, as shown in FIG. 5, the straddled vehicle 1 includes a frame bracket 76, fixed to the seat frames 5, an intermediate bracket 77, supported by the frame bracket 76, and the tank bracket 78, supported by the intermediate bracket 77. The straddled vehicle 1 further includes a tank stay 79, fixed to the tank main body 63, nuts N2, fixed to the tank stay 79, cylindrical dampers D2, held by the tank bracket 78, and bolts B2, coupling the dampers D2 to the tank stay 79.

The structure coupling the tank bracket 78 and the tank stay 79 is similar to the coupling structure described above. Specifically, the dampers D2 are disposed inside penetrating holes provided in the tank bracket 78. Edges of the penetrating holes that hold the dampers D2 to the tank bracket are disposed inside annular groove provided at outer peripheries of the dampers D2. The bolts B2 are inserted in cylindrical collars disposed inside the dampers D2. Tip portions of the bolts B2 are screwed into the nuts N2 held by the tank stay 79. The tank main body 63 is coupled to the tank bracket 78 via the dampers D2 that are an example of an elastic body.

As shown in FIG. 8, the frame bracket 76 includes two pairs of facing plates 76a. The facing plates 76a of each pair face each other in the right-left direction. The intermediate bracket 77 includes two intermediate pipes 77a extending in the right-left direction. Each intermediate pipe 77a is disposed between a pair of facing plates 76a. A damper D3, extending in the right-left direction, is press-fitted inside each intermediate pipe 77a. Respective end portions of each damper D3 projects from respective end portions of an intermediate pipe 77a. A cylindrical collar C3 is inserted inside each damper D3. A shaft portion of a bolt B3 penetrates through each pair of facing plate 76a in the right-left direction via a space inside a collar C3. Each pair of facing plates 76a is clamped in the right-left direction by a head portion of a bolt B3 and a nut N3 and each damper D3 is thereby clamped in the right-left direction by a pair of facing plates 76a. Each damper D3 is thereby held by a pair of facing plates 76a.

The shape, etc., of the fuel tank 35 shall now be described in detail.

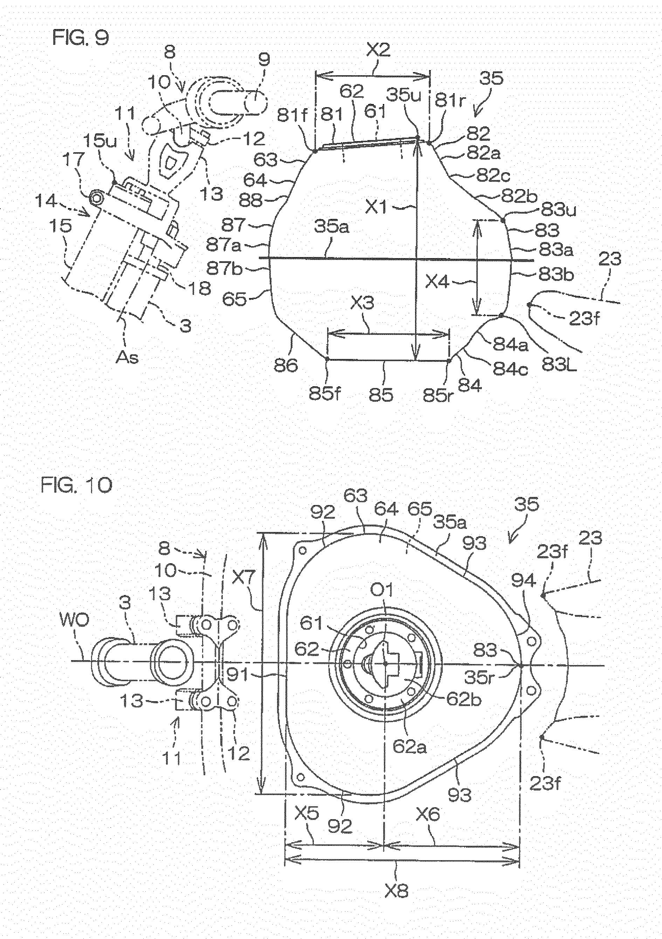

FIG. 9 is a schematic left side view of the fuel tank 35. FIG. 10 is a schematic plan view of the fuel tank 35. In FIG. 9 and FIG. 10, the center bracket 67, etc., (see FIG. 6) are omitted and the fuel tank 35 is shown in a simplified manner.

As mentioned above, the tank main body 63 includes the upper member 64 and the lower member 65 and therefore the tank main body 63 is provided with the joined portion 35a, at which the upper member 64 and the lower member 65 are connected. However, if the tank main body 63 is made of resin, such a joined portion 35a is not needed necessarily. Therefore, in the following, a description shall be provided with the assumption that the joined portion 35a is not present, unless specific notice is given. For example, a rear end 35r of the fuel tank 35 signifies a rear end of the fuel tank 35 that does not include the joined portion 35a.

First the shape, etc., of the fuel tank 35 in side view shall be described.

As shown in FIG. 9, the fuel tank 35 includes an upper edge portion 81, at which the fuel filler hole 61 is disposed, a lower edge portion 85, disposed below the upper edge portion 81, a front edge portion 87, disposed further to the front than the upper edge portion 81 and the lower edge portion 85, and a rear edge portion 83, disposed further to the rear than the upper edge portion 81 and the lower edge portion 85. The fuel tank 35 further includes a first inclined portion 82, extending from the upper edge portion 81 to the rear edge portion 83, a second inclined portion 84, extending from the rear edge portion 83 to the lower edge portion 85, a third inclined portion 86, extending from the lower edge portion 85 to the front edge portion 87, and a fourth inclined portion 88, extending from the front edge portion 87 to the upper edge portion 81.

The upper edge portion 81 of the fuel tank 35 includes a front end 81f disposed in front of the oil filler hole 61, and a rear end 81r, disposed behind the oil filler hole 61. The front end 81f of the upper edge portion 81 is disposed further to the front than a front end 85f of the lower edge portion 85. The rear end 81r of the upper edge portion 81 is disposed further to the front than a rear end 85r of the lower edge portion 85. A dimension X1 (longest dimension) in the up-down direction from the upper edge portion 81 to the lower edge portion 85 is greater than the dimension X2 in the front-rear direction from the front end 81f of the upper edge portion 81 to the rear end 81 r of the upper edge portion 81. The dimension X2 is smaller than a dimension X3 in the front-rear direction from the front end 85f of the lower edge portion 85 to the rear end 85r of the lower edge portion 85.

The first inclined portion 82 of the fuel tank 35 includes an upper inclined portion 82a, extending downward and rearward from the upper edge portion 81, and a lower inclined portion 82b, extending downward and rearward from the upper inclined portion 82a. The upper inclined portion 82a and the lower inclined portion 82b define a downward-recessed recess portion 82c. An angle of the upper inclined portion 82a with respect to a horizontal plane is greater than an angle of the lower inclined portion 82b with respect to the horizontal plane. The upper inclined portion 82a is shorter than the lower inclined portion 82b in the front-rear direction. The upper inclined portion 82a is disposed further to the front than the rear end 85r of the lower edge portion 85.

The rear edge portion 83 of the fuel tank 35 is disposed at a height in between those of the upper edge portion 81 and the lower edge portion 85. The rear edge portion 83 includes an upper inclined portion 83a and a lower inclined portion 83b that are partitioned by the joined portion 35a of the tank main body 63. The upper inclined portion 83a extends upward and forward from the joined portion 35a. The lower inclined portion 83b extends downward and forward from the joined portion 35a. A dimension X4 in the up-down direction from an upper end 83u of the rear edge portion 83 to a lower end 83L of the rear edge portion 83 is smaller than the dimension X2 in the front-rear direction from the front end 81f of the upper edge portion 81 to the rear end 81 r of the upper edge portion 81. As shown in FIG. 10, the rear edge portion 83 is disposed in front of a front edge of the main seat 23 in plan view.

As shown in FIG. 9, the second inclined portion 84 of the fuel tank 35 defines a shallow recess portion 84c. The recess portion 84c is recessed upward and forward. The second inclined portion 84 includes an inclined portion 84a extending downward and forward from the recess portion 84c to the lower edge portion 85. The second inclined portion 84 is positioned further to the rear than the rear end 81r of the upper edge portion 81. The second inclined portion 84 is connected to the third inclined portion 86 of the fuel tank 35 via the lower edge portion 85. The third inclined portion 86 extends forward and upward toward the front edge portion 87. A rear end of the third inclined portion 86 is disposed further to the rear than the front end 81f of the upper edge portion 81.

The front edge portion 87 of the fuel tank 35 is disposed at a height in between those of the upper edge portion 81 and the lower edge portion 85. The front edge portion 87 is positioned in front of the rear edge portion 83. The front edge portion 87 includes an upper inclined portion 87a and a lower inclined portion 87b that are partitioned by the joined portion 35a of the tank main body 63. The upper inclined portion 87a has a convexly arcuate shape. The upper inclined portion 87a extends upward and rearward from the joined portion 35a. The lower inclined portion 87b extends downward and rearward from the joined portion 35a. The front edge portion 87 is connected via the fourth inclined portion 88 to the upper edge portion 81. The fourth inclined portion 88 is disposed in front of the first inclined portion 82.

The shape, etc., of the fuel tank 35 in plan view shall now be described.

As shown in FIG. 10, the fuel tank 35 has a rectilinear front edge portion 91, passing through the vehicle center WO in plan view, and two side edge portions 93, extending rearward toward the vehicle center WO. The front edge portion 91 is disposed in front of the oil filler hole 61. The two side edge portions 93 are respectively disposed at a right side and a left side of the oil filler hole 61. The front edge portion 91 is connected via convex front arcuate portions 92 to the side edge portions 93. The two side edge portions 93 are connected to each other via a convex rear arcuate portion 94. The two front arcuate portions 92 are disposed at respective sides of the vehicle center WO. The rear arcuate portion 94 overlaps with the vehicle center WO.

In plan view, a dimension X5 in the front-rear direction from the front edge portion 91, corresponding to a front end of the fuel tank 35, to a center O1 of the oil filler hole 61 is smaller than a dimension X6 in the front-rear direction from a rear end of the rear arcuate portion 94, corresponding to the rear end 35r of the fuel tank 35, to the center O1 of the oil filler hole 61. In plan view, a dimension X7 of the fuel tank 35 in the right-left direction, that is, a dimension in the right-left direction from a right end of the fuel tank 35 to a left end of the fuel tank 35 is greater than a dimension X8 of the fuel tank 35 in the front-rear direction, that is, a dimension in the front-rear direction from the front end of the fuel tank 35 to the rear end 35r of the fuel tank 35. The dimension X8 of the fuel tank 35 in the front-rear direction is smaller than a dimension of the main seat 23 in the front-rear direction, that is, a dimension in the front-rear direction from the front end 23f of the main seat 23 to the rear end 23r of the main seat 23 (see FIG. 2).

As described above, unlike the conventional concept of disposing the fuel tank, positioned above the engine, closer to the engine to centralize the mass, the fuel tank 35 is made long in the up-down direction in the present preferred embodiment. And instead of disposing the fuel tank closer to the engine as in the conventional art, the rear end 35r of the fuel tank 35 is moved forward and the riding positions of the rider and the passenger are moved forward. That is, a center of gravity of the rider and the passenger is disposed closer to the engine 27 to centralize the mass effectively.

On the other hand, it is apprehended that when the riding positions of the rider and the passenger are moved forward, the comfort of the rider and the passenger (especially the comfort of the passenger) will degrade. However, the fuel tank 35 is made long in the up-down direction and therefore the rider is encouraged by the fuel tank 35 to raise his/her upper body. As shown in FIG. 11, when the upper body of the rider is raised, the passenger can hold the waist of the rider easily and can easily come into contact with the rider. Close contact of the passenger with the rider can thereby be improved and degradation of comfort of the passenger can be suppressed.

Specifically, the front end 23f of the main seat 23 is disposed further to the front than the pivot axis Ap that corresponds to the rotation center of the rear arm 22. The center 24c of the tandem seat 24 in the front-rear direction is disposed further to the front than the rotation center Cr of the rear wheel Wr in a side view of the straddled vehicle 1. The main seat 23 and the tandem seat 24 are thereby moved forward and the riding positions of the rider and the passenger can thus be moved forward. The mass can thus be centralized effectively. Further, the air cleaner 34 is disposed behind the cylinder 30 and therefore in comparison to a case where it is disposed above the engine 27, the fuel tank 35 can be disposed closer to the engine 27 in the up-down direction. The mass can thereby be centralized further.

In addition, the dimension in the up-down direction from the upper edge portion 81 of the fuel tank 35 to the lower edge portion 85 of the fuel tank 35 is greater than the dimension of the upper edge portion 81 of the fuel tank 35 in the front-rear direction. That is, the fuel tank 35 is long in the up-down direction. The capacity of the fuel tank 35 can thus be maintained even if the fuel tank 35 is shortened in the vehicle front-rear direction. Further, the fuel tank 35 is moved forward so that the rear end 35r of the fuel tank 35 is positioned further to the front than the pivot axis Ap and therefore the main seat 23 and the tandem seat 24 can be moved forward. The mass can thus be centralized while maintaining the capacity of the fuel tank 35.

Further, the dimension in the up-down direction from the upper edge portion 81 of the fuel tank 35 to the lower edge portion 85 of the fuel tank 35 is greater than the dimension of the upper edge portion 81 of the fuel tank 35 in the front-rear direction and the fuel tank 35 positioned in front of the rider is thus long in the up-down direction so that the rider is encouraged to raise his/her upper body. Consequently, the rider rides in a posture that makes it easy for the passenger to put his/her hand around the waist of the rider. Therefore, even if a riding space for the passenger is shortened in the front-rear direction, close contact of the passenger with the rider can be improved and degradation of comfort of the passenger can be suppressed.

With the present preferred embodiment, the fuel tank 35 projects upward and the upper end 35u of the fuel tank 35 is disposed higher than the rear end 24r of the tandem seat 24. The fuel tank 35 is thereby made long in the up-down direction. The capacity of the fuel tank 35 can thus be secured even if the fuel tank 35 is shortened in the front-rear direction. In addition, the upper end 35u of the fuel tank 35 is disposed at a high position so that the rider is encouraged by the fuel tank 35 to raise his/her upper body. When the upper body of the rider is raised, the passenger can hold the waist of the rider easily and can easily come into contact with the rider. Close contact of the passenger with the rider can thereby be improved and degradation of comfort of the passenger can be suppressed.

With the present preferred embodiment, the fuel tank 35 is disposed at a high position so that the lower edge portion 85 of the fuel tank 35 is positioned above the main frame 4 in side view. The rider is thus encouraged by the fuel tank 35 to raise his/her upper body. Consequently, the rider rides in a posture that makes it easy for the passenger to put his/her hand around the waist of the rider. Close contact of the passenger with the rider can thereby be improved and degradation of comfort of the passenger can be suppressed.

With the present preferred embodiment, the dimension of the fuel tank 35 in the front-rear direction is smaller than the dimension of the fuel tank 35 in the vehicle width direction. Because the fuel tank 35 is shortened in the front-rear direction in this way, the main seat 23 and the tandem seat 24 can be moved forward and the riding positions of the rider and the passenger can be moved forward. The mass can thus be centralized effectively.

With the present preferred embodiment, the handle grips 9 of the steering handle 8 are disposed at high positions. The rider gripping the handle grips 9 is thus encouraged by the steering handle 8 to raise his/her upper body. When the upper body of the rider is raised, the passenger can hold the waist of the rider easily. Close contact of the passenger with the rider can thereby be improved and degradation of comfort of the passenger can be suppressed.

With the present preferred embodiment, the main switch 44 that is operated by the rider when the engine 27 is to be started is disposed, in plan view, between the steering handle 8 and the fuel tank 35. Therefore, in comparison to a case where the main switch 44 is disposed in front of the steering handle 8, the front end of the fuel tank 35 is moved rearward. A center of gravity of the fuel tank 35 is thus moved rearward and disposed closer to a center of gravity of the engine 27 in the front-rear direction. The mass can thereby be centralized further.

### Other Preferred Embodiments

The present teaching is not restricted to the contents of the preferred embodiments and various modifications of the embodiments are possible.

For example, with the preferred embodiment, the case where the upper end 35u of the fuel tank 35 is disposed higher than the rear end 24r of the tandem seat 24 was described. However, the upper end 35u of the fuel tank 35 may be disposed at the same height as the rear end 24r of the tandem seat 24 or may be disposed lower than the rear end 24r of the tandem seat 24.

With the preferred embodiment, the case where all portions of the fuel tank 35 are separated upward from the main frame 4 in side view and the fuel tank 35 is not overlapped with the main frame 4 in side view was described. However, the fuel tank 35 may be overlapped with the main frame 4 in side view.

With the preferred embodiment, the case where the dimension of the fuel tank 35 in the right-left direction is greater than the dimension of the fuel tank 35 in the front-rear direction was described. However, the dimension of the fuel tank 35 in the right-left direction may be not more than the dimension of the fuel tank 35 in the front-rear direction.

With the preferred embodiment, the case where the handle grips 9 are disposed higher than the upper end 35u of the fuel tank 35 in side view was described. However, at least a portion of the handle grips 9 may be disposed at a height equal to that of the fuel tank 35.

With the preferred embodiment, the case where the main switch 44, operated by the rider when starting the engine 27, etc., is disposed between the steering handle 8 and the fuel tank 35 in plan view was described. However, the main switch 44 may be disposed in front of the steering handle 8.

In the preferred embodiments, a case where the straddled vehicle 1 is a sport-type motorcycle is described. However, the straddled vehicle 1 may be a scooter type motorcycle. The straddled vehicle 1 is not limited to a motorcycle, but may be a straddled vehicle including not less than 3 wheels, or an all-terrain vehicle.

Two or more of any of the arrangements described above may be combined.

## Claims

1. A straddled vehicle (1) comprising:
a head pipe (3);
a main frame (4) extending rearward from the head pipe (3);
a rear arm (22) supported by the main frame (4) such that the rear arm (22) rotates around a pivot axis (Ap) extending in a vehicle width direction;
a rear wheel (Wr) supported by the rear arm (22);
an engine (27) at least a portion of which is disposed at a position below the main frame (4) and in front of the pivot axis (Ap) and including a crankcase (32) and a cylinder (30) extending upward from the crankcase (32);
an air cleaner disposed behind the cylinder (30) such that a front end of the air cleaner (34) is disposed further to the rear than a rear end of the cylinder (30);
a fuel tank (35) disposed at a position behind the head pipe (3) and above the engine (27); and
a main seat (23) disposed behind the fuel tank (35) and on which a rider sits;
a tandem seat (24) at least a portion of which is disposed at a position further to the rear and higher than the main seat (23) and on which a passenger sits;
wherein the fuel tank (35) includes an upper edge portion (81) at which a fuel filler hole (61) is disposed, a lower edge portion (85) disposed below the upper edge portion (81), a rear edge portion (83) disposed between the upper edge portion (81) and the lower edge portion (85) in a vehicle up-down direction and extending in the vehicle up-down direction, and a first inclined portion (82) extending forward and upward and coupling the rear edge portion (83) and the upper edge portion (81) with each other,
a dimension (X1) in the vehicle up-down direction from the upper edge portion (81) of the fuel tank (35) to the lower edge portion (85) of the fuel tank (35) is greater than a dimension (X2) of the upper edge portion (81) of the fuel tank (35) in a vehicle front-rear direction, and
a center (24c) of the tandem seat (24) in the vehicle front-rear direction is disposed further to the front than a rotation center (Cr) of the rear wheel (Wr) in the side view of the straddled vehicle (1),
**characterized in that**
the tandem seat (24) is formed separately from the main seat (23),
at least a portion of a front edge of the main seat (23) is disposed behind the rear edge portion (83) of the fuel tank (35) in a plan view of the straddled vehicle (1), and
a rear end (35r) of the fuel tank (35) and a front end (23f) of the main seat (23) are disposed further to the front than the pivot axis (Ap) in a side view of the straddled vehicle (1).

2. A straddled vehicle (1) according to Claim 1, wherein an upper end (35u) of the fuel tank (35) is disposed higher than a rear end (24r) of the tandem seat (24).

3. A straddled vehicle (1) according to Claim 1 or 2, wherein the lower edge portion (85) of the fuel tank (35) is, in the side view of the straddled vehicle (1), disposed above the main frame (4) and is separated from the main frame (4) in the vehicle up-down direction.

4. A straddled vehicle (1) according to any one of Claims 1 to 3, wherein a dimension (X8) in the vehicle front-rear direction from a front end of the fuel tank (35) to the rear end (35r) of the fuel tank (35) is smaller than a dimension (X7) in the vehicle width direction from a left end of the fuel tank (35) to a right end of the fuel tank (35).

5. A straddled vehicle (1) according to any one of Claims 1 to 4, wherein the straddled vehicle (1) further comprises: a steering handle (8) that includes two handle grips (9) to be gripped by the rider and is pivoted in the vehicle width direction in accordance with an operation of the rider steering the straddled vehicle (1); and
the handle grips (9) are disposed higher than the upper end (35u) of the fuel tank (35) in the side view of the straddled vehicle (1) when the steering handle (8) is disposed at a straight traveling position at which the straddled vehicle (1) travels straight.

6. A straddled vehicle (1) according to any one of Claims 1 to 4, wherein the straddled vehicle (1) further comprises: a steering handle (8) that pivots in the vehicle width direction in accordance with an operation of the rider steering the straddled vehicle (1); and
a main switch (44) disposed between the steering handle (8) and the fuel tank (35) in the plan view of the straddled vehicle (1) and being operated by the rider when the engine (27) is to be started.

7. A straddled vehicle (1) according to any one of Claims 1 to 6, wherein the dimension (X8) in the vehicle front-rear direction from the front end of the fuel tank (35) to the rear end (35r) of the fuel tank (35) is smaller than a dimension in the vehicle front-rear direction from the front end (23f) of the main seat (23) to a rear end (23r) of the main seat (23).

8. A straddled vehicle (1) according to any one of Claims 1 to 7, wherein the rear end (24r) of the tandem seat (24) is disposed further to the front than the rotation center (Cr) of the rear wheel (Wr) in the side view of the straddled vehicle (1).

## Patentansprüche

1. Spreizsitz-Fahrzeug (1), das umfasst:
ein Steuerrohr (3);
einen Hauptrahmen (4), der sich von dem Steuerrohr (3) nach hinten erstreckt;
eine Hinterradschwinge (22), die über den Hauptrahmen (4) so gelagert ist, dass sich die Hinterradschwinge (22) um eine Schwenkachse (Ap) herum dreht, die sich in einer Fahrzeug-Breitenrichtung erstreckt;
ein Hinterrad (Wr), das über die Hinterradschwinge (22) gelagert ist;
einen Motor (27), von dem wenigstens ein Teil an einer Position unterhalb des Hauptrahmens (4) und vor der Schwenkachse (Ap) angeordnet ist und der ein Kurbelgehäuse (32) sowie einen Zylinder (30) enthält, der sich von dem Kurbelgehäuse (32) nach oben erstreckt;
einen Luftfilter, der hinter dem Zylinder (30) so angeordnet ist, dass ein vorderes Ende des Luftfilters (34) weiter hinten angeordnet ist als ein hinteres Ende des Zylinders (30);
einen Kraftstofftank (35), der an einer Position hinter dem Steuerrohr (3) und oberhalb des Motors (27) angeordnet ist; sowie
einen Haupt-Sitz (23), der hinter dem Kraftstofftank (35) angeordnet ist und auf dem ein Fahrer sitzt;
einen Sozius-Sitz (24), von dem wenigstens ein Teil an einer Position angeordnet ist, die weiter hinten und höher liegt als der Haupt-Sitz (23), und auf dem ein Sozius sitzt;
wobei der Kraftstofftank (35) einen oberen Randabschnitt (81), an dem ein Kraftstoffeinfüllloch (61) angeordnet ist, einen unteren Randabschnitt (85), der unterhalb des oberen Randabschnitts (81) angeordnet ist, einen hinteren Randabschnitt (83), der in einer vertikalen Richtung des Fahrzeugs zwischen dem oberen Randabschnitt (81) und dem unteren Randabschnitt (85) angeordnet ist und sich in der vertikalen Richtung des Fahrzeugs erstreckt, sowie einen ersten geneigten Abschnitt (82) aufweist, der sich nach vorne und oben erstreckt und den hinteren Randabschnitt (83) und den oberen Randabschnitt (81) miteinander verbindet,
eine Abmessung (X1) in der vertikalen Richtung des Fahrzeugs von dem oberen Randabschnitt (81) des Kraftstofftanks (35) zu dem unteren Randabschnitt (85) des Kraftstofftanks (35) größer ist als eine Abmessung (X2) des oberen Randabschnitts (81) des Kraftstofftanks (35) in einer Fahrzeug-Längsrichtung, und
ein Mittelpunkt (24c) des Sozius-Sitzes (24) in der Fahrzeug-Längsrichtung in der Seitenansicht des Spreizsitz-Fahrzeugs (1) weiter vorn angeordnet ist als ein Drehmittelpunkt (Cr) des Hinterrades (Wr),
**dadurch gekennzeichnet, dass**
der Sozius-Sitz (24) separat von dem Haupt-Sitz (23) ausgebildet ist,
wenigstens ein Abschnitt einer Vorderkante des Haupt-Sitzes (23) in einer Draufsicht auf das Spreizsitz-Fahrzeug (1) hinter dem hinteren Randabschnitt (83) des Kraftstofftanks (35) angeordnet ist, und
ein hinteres Ende (35r) des Kraftstofftanks (35) und ein vorderes Ende (23f) des Haupt-Sitzes (23) in einer Seitenansicht des Spreizsitz-Fahrzeugs (1) weiter vorn angeordnet sind als die Schwenkachse (Ap).

2. Spreizsitz-Fahrzeug (1) nach Anspruch 1, wobei ein oberes Ende (35u) des Kraftstofftanks (35) höher angeordnet ist als ein hinteres Ende (24r) des Sozius-Sitzes (24).

3. Spreizsitz-Fahrzeug (1) nach Anspruch 1 oder 2, wobei der untere Randabschnitt (85) des Kraftstofftanks (35) in der Seitenansicht des Spreizsitz-Fahrzeugs (1) oberhalb des Hauptrahmens (4) angeordnet und in der vertikalen Richtung des Fahrzeugs von dem Hauptrahmen (4) getrennt ist.

4. Spreizsitz-Fahrzeug (1) nach einem der Ansprüche 1 bis 3, wobei eine Abmessung (X8) von einem vorderen Ende des Kraftstofftanks (35) zu dem hinteren Ende (35r) des Kraftstofftanks (35) in der Fahrzeug-Längsrichtung kleiner ist als eine Abmessung (X7) von einem linken Ende des Kraftstofftanks (35) zu einem rechten Ende des Kraftstofftanks (35) in der Fahrzeug-Breitenrichtung.

5. Spreizsitz-Fahrzeug (1) nach einem der Ansprüche 1 bis 4, wobei das Spreizsitz-Fahrzeug (1) des Weiteren einen Lenkgriff (8) umfasst, der zwei von dem Fahrer zu ergreifende Handgriffe (9) enthält und entsprechend einer Betätigung des das Spreizsitz-Fahrzeug (1) lenkenden Fahrers in der Fahrzeug-Breitenrichtung geschwenkt wird; und
die Handgriffe (9) in der Seitenansicht des Spreizsitz-Fahrzeugs (1) höher angeordnet sind als das obere Ende (35u) des Kraftstofftanks (35), wenn der Lenkgriff (8) in einer Geradeausfahrt-Position angeordnet ist, in der das Spreizsitz-Fahrzeug (1) geradeaus fährt.

6. Spreizsitz-Fahrzeug (1) nach einem der Ansprüche 1 bis 4, wobei das Spreizsitz-Fahrzeug (1) des Weiteren einen Lenkgriff (8), der entsprechend einer Betätigung des das Spreizsitz-Fahrzeug (1) lenkenden Fahrers in der Fahrzeug-Breitenrichtung geschwenkt wird; sowie
einen Hauptschalter (44) umfasst, der in der Draufsicht auf das Spreizsitz-Fahrzeug (1) zwischen dem Lenkgriff (8) und dem Kraftstofftank (35) angeordnet ist und von dem Fahrer betätigt wird, wenn der Motor (27) gestartet werden soll.

7. Spreizsitz-Fahrzeug (1) nach einem der Ansprüche 1 bis 6, wobei die Abmessung (X8) von dem vorderen Ende des Kraftstofftanks (35) zu dem hinteren Ende (35r) des Kraftstofftanks (35) in der Fahrzeug-Längsrichtung kleiner ist als eine Abmessung von dem vorderen Ende (23f) des Haupt-Sitzes (23) zu dem hinteren Ende (23r) des Haupt-Sitzes (23) in der Fahrzeug-Längsrichtung.

8. Spreizsitz-Fahrzeug (1) nach einem der Ansprüche 1 bis 7, wobei das hintere Ende (24r) des Sozius-Sitzes (24) in der Seitenansicht des Spreizsitz-Fahrzeugs (1) weiter vorn angeordnet ist als der Drehmittelpunkt (Cr) des Hinterrades (Wr).

## Revendications

1. Véhicule à enfourcher (1) comprenant :
un tube de tête (3) ;
un châssis principal (4) s'étendant vers l'arrière depuis le tube de tête (3) ;
un bras arrière (22) supporté par le châssis principal (4) de telle sorte que le bras arrière (22) tourne autour d'un axe de pivotement (Ap) s'étendant dans une direction de largeur de véhicule ;
une roue arrière (Wr) supportée par le bras arrière (22) ;
un moteur (27) dont au moins une partie est disposée à une position en dessous du châssis principal (4) et à l'avant de l'axe de pivotement (Ap) et comprenant un carter moteur (32) et un cylindre (30) s'étendant vers le haut depuis le carter moteur (32) ;
un purificateur d'air disposé derrière le cylindre (30) de telle sorte qu'une extrémité avant du purificateur d'air (34) est disposée davantage vers l'arrière qu'une extrémité arrière du cylindre (30) ;
un réservoir de carburant (35) disposé à une position située derrière le tube de tête (3) et au-dessus du moteur (27) ; et
un siège principal (23) disposé derrière le réservoir de carburant (35) et sur lequel un motocycliste est assis ;
un siège tandem (24) dont au moins une partie est disposée à une position davantage vers l'arrière et plus haut que le siège principal (23) et sur lequel un passager est assis ;
dans lequel le réservoir de carburant (35) comprend une partie de bord supérieure (81) au niveau de laquelle un trou de remplissage de carburant (61) est disposé, une partie de bord inférieure (85) disposée sous la partie de bord supérieure (81), une partie de bord arrière (83) disposée entre la partie de bord supérieure (81) et la partie de bord inférieure (85) dans une direction haut-bas de véhicule et s'étendant dans la direction haut-bas de véhicule, et une première partie inclinée (82) s'étendant vers l'avant et vers le haut et couplant la partie de bord arrière (83) et la partie de bord supérieure (81) l'une à l'autre,
une dimension (X1) dans la direction haut-bas de véhicule depuis la partie de bord supérieure (81) du réservoir de carburant (35) jusqu'à la partie de bord inférieure (85) du réservoir de carburant (35) est supérieure à une dimension (X2) de la partie de bord supérieure (81) du réservoir de carburant (35) dans une direction avant-arrière de véhicule, et
un centre (24c) du siège tandem (24) dans la direction avant-arrière de véhicule est disposé davantage vers l'avant qu'un centre de rotation (Cr) de la roue arrière (Wr) sur la vue de côté du véhicule à enfourcher (1),
**caractérisé en ce que**
le siège tandem (24) est formé séparément du siège principal (23),
au moins une partie d'un bord avant du siège principal (23) est disposée derrière la partie de bord arrière (83) du réservoir de carburant (35) sur une vue en plan du véhicule à enfourcher (1), et
une extrémité arrière (35r) du réservoir de carburant (35) et une extrémité avant (23f) du siège principal (23) sont disposées davantage vers l'avant que l'axe de pivotement (Ap) sur une vue de côté du véhicule à enfourcher (1).

2. Véhicule à enfourcher (1) selon la revendication 1, dans lequel une extrémité supérieure (35u) du réservoir de carburant (35) est disposée plus haut qu'une extrémité arrière (24r) du siège tandem (24).

3. Véhicule à enfourcher (1) selon la revendication 1 ou 2, dans lequel la partie de bord inférieure (85) du réservoir de carburant (35) est, sur la vue de côté du véhicule à enfourcher (1), disposée au-dessus du châssis principal (4) et est séparée du châssis principal (4) dans la direction haut-bas de véhicule.

4. Véhicule à enfourcher (1) selon l'une quelconque des revendications 1 à 3, dans lequel une dimension (X8) dans la direction avant-arrière de véhicule depuis une extrémité avant du réservoir de carburant (35) jusqu'à l'extrémité arrière (35r) du réservoir de carburant (35) est inférieure à une dimension (X7) dans la direction de largeur de véhicule depuis une extrémité gauche du réservoir de carburant (35) jusqu'à une extrémité droite du réservoir de carburant (35).

5. Véhicule à enfourcher (1) selon l'une quelconque des revendications 1 à 4, dans lequel le véhicule à enfourcher (1) comprend en outre : une poignée de guidage (8) qui comprend deux prises de poignée (9) à saisir par le motocycliste et est pivotée dans la direction de largeur de véhicule conformément à une opération du motocycliste guidant le véhicule à enfourcher (1) ; et
les prises de poignée (9) sont disposées plus haut que l'extrémité supérieure (35u) du réservoir de carburant (35) sur la vue de côté du véhicule à enfourcher (1) lorsque la poignée de guidage (8) est disposée dans une position de déplacement en ligne droite à laquelle le véhicule à enfourcher (1) se déplace en ligne droite.

6. Véhicule à enfourcher (1) selon l'une quelconque des revendications 1 à 4, dans lequel le véhicule à enfourcher (1) comprend en outre : une poignée de guidage (8) qui pivote dans la direction de largeur de véhicule conformément à une opération du motocycliste guidant le véhicule à enfourcher (1) ; et
un interrupteur principal (44) disposé entre la poignée de guidage (8) et le réservoir de carburant (35) sur la vue en plan du véhicule à enfourcher (1) et étant actionné par le motocycliste lorsque le moteur (27) doit être démarré.

7. Véhicule à enfourcher (1) selon l'une quelconque des revendications 1 à 6, dans lequel la dimension (X8) dans la direction avant-arrière de véhicule depuis l'extrémité avant du réservoir de carburant (35) jusqu'à l'extrémité arrière (35r) du réservoir de carburant (35) est inférieure à une dimension dans la direction avant-arrière de véhicule depuis l'extrémité avant (23f) du siège principal (23) jusqu'à une extrémité arrière (23r) du siège principal (23).

8. Véhicule à enfourcher (1) selon l'une quelconque des revendications 1 à 7, dans lequel l'extrémité arrière (24r) du siège tandem (24) est disposée davantage vers l'avant que le centre de rotation (Cr) de la roue arrière (Wr) sur la vue de côté du véhicule à enfourcher (1).
